# EUROPÄISCHE PATENTSCHRIFT

(11) **EP 1 198 970 B1**
(45) Veröffentlichungstag und Bekanntmachung des Hinweises auf die Patenterteilung: **14.12.2005**
(21) Anmeldenummer: 00954338.0
(22) Anmeldetag: 19.07.2000
(51) Int. Cl.: H04Q 11/04, H04M 11/06, H04L 5/06

(54) **VERFAHREN UND VORRICHTUNG ZUR GEMEINSAMEN ÜBERTRAGUNG VON ISDN- UND ADSL-DATEN**
METHOD AND DEVICE FOR ISDN/ADSL JOINT DATA TRANSFER
PROCEDE ET DISPOSITIF POUR TRANSMETTRE EN COMMUN DES DONNEES RNIS ET ADSL

(30) Priorität: 28.07.1999 DE 19935498
(43) Veröffentlichungstag der Anmeldung: 24.04.2002
(73) Patentinhaber: Infineon Technologies AG, 81669 München (DE)
(72) Erfinder: FRENZEL, Rudi, D-81735 München (DE); HÖFER, Gerald, D-86853 Langerringen (DE)
(74) Vertreter: Reinhard - Skuhra - Weise & Partner
(86) Internationale Anmeldenummer: PCT/DE2000/002355
(87) Internationale Veröffentlichungsnummer: WO 2001/010166

(56) Entgegenhaltungen:
- EP-A- 0 740 451
- EP-A- 0 844 795
- GB-A- 2 313 979
- US-A- 5 596 604
- US-A- 5 889 856

## Beschreibung

Die vorliegende Erfindung betrifft ein Verfahren und eine Vorrichtung zur gemeinsamen Übertragung von ISDN- und ADSL-Daten zwischen einer ersten Station und einer zweiten Station.

Aus der US-A-5,596,604 ist es bekannt, daß ein ISDN-Datenstrom mittels eines ADSL-Modulators in einen ADSL-Datenstrom zur Übertragung als gemischter Datenstrom moduliert wird.

Die US-A-5,757,303 betrifft eine POTS(Plain Old Telephone Service) -Splitteranordung mit einem verbessertem Transhybridverlust für eine digitale Teilnehmerschleifenübertragung. Die Splitteranordnung dient zum Aufspalten der Teilnehmerschleife in einen ersten Übertragungsweg einschließlich eines Tiefpaßfilters, welcher eine Fortführung von Telefondienstleistungsignalübertragungen entlang der Teilnehmerschleife ermöglicht, sowie einen zweiten Signalübertragungsweg, wobei der zweite Signalübertragungsweg ein kapazitives Element zum Abschwächen der Telefondienstleistungssignale aufweist.

Die US-A-5,742,527 beschreibt einen flexiblen ADSL-Empfänger (ADSL = Asymmetrical Digital Subscriber Line). Bei diesem bekannten ADSL-Empfänger ist die Bandbreite bis 138 kHz für die ISDN-Übertragung (ISDN = Integrared Service Digital Network) reserviert, und ab 138 kHz beginnt der Upstream(Stromaufwärts-richtung)-Kanal des ADSL, wobei .der Downstream(Stromabwärts-richtungs)-Kanal speziell verschoben ist.

In der jüngeren Vergangenheit wurden verschiedene Möglichkeiten realisiert, wie ADSL-Daten parallel zu ISDN-Daten übertragen werden können. Bei allen diesen bekannten Vorschlägen wurden zwei Modulatoren benötigt, und zwar jeweils einer für die ISDN-Daten und ein weiterer für die ADSL-Daten, wobei gédem Modulationsschema ein bestimmtes Frequenzband reserviert war.

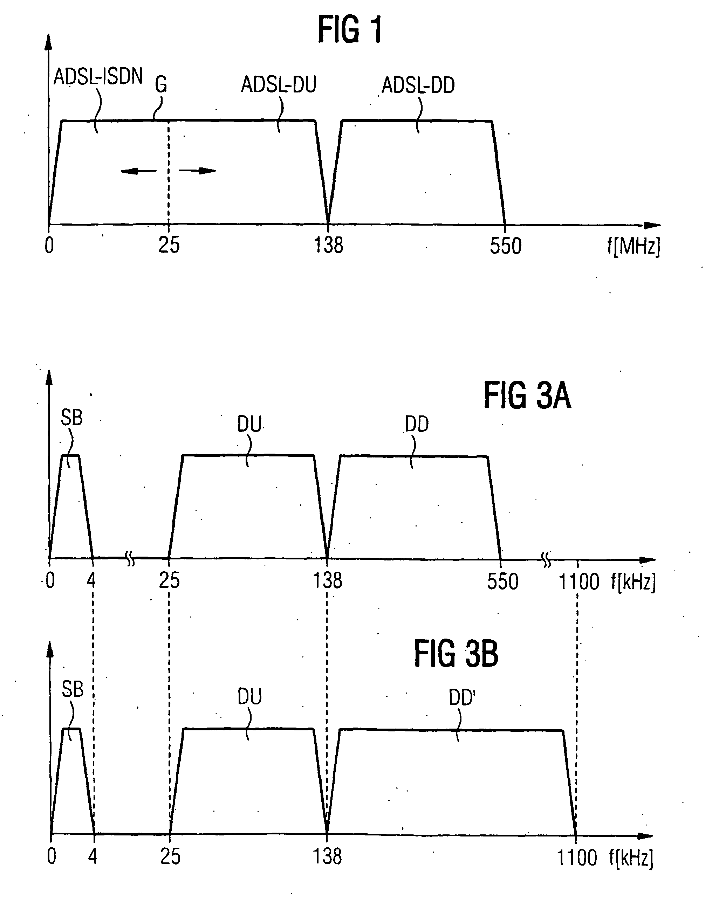

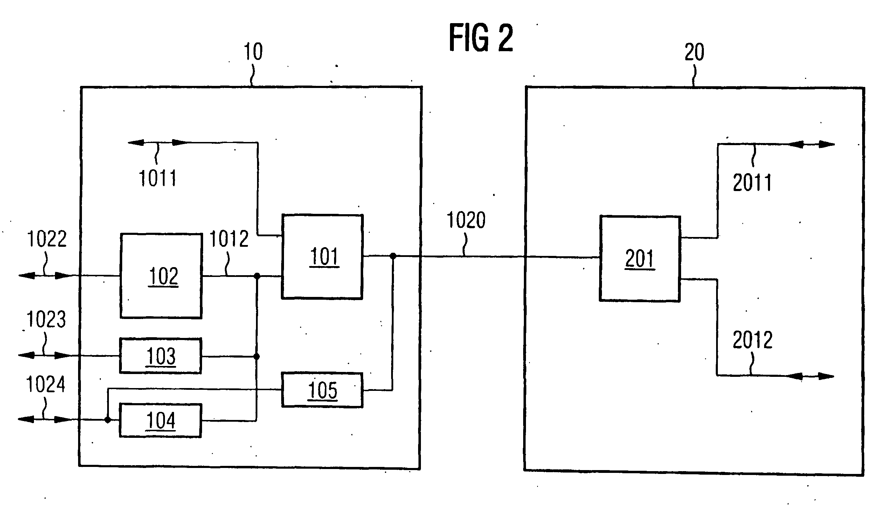

Figur 3 zeigt eine schematische Darstellung der Frequenzbandaufteilung bei üblicher paralleler Übertragung von POTS- und ADSL-Daten, und zwar Fig. 3a für ADSL-lite und Fig. 3b für ADSL-full.

Gemäß der Darstellung von Figur 3a ist für das Sprachband SB von POTS der Bereich von 0 bis 4 kHz reserviert. Der Upstream-Kanal DU für ADSL nimmt.den Bereich von 25 bis 138 kHz ein, während der Downstream-Kanal DD für ADSL den Bereich von 138 bis 550 kHz einnimmt.

Gemäß der Darstellung von Figur 3b ist der Downstream-Kanal bei ADSL-full auf der hochfrequenten Seite bis zu 1100 kHz ausgedehnt.

Verschiedene Vorschläge beschreiben die Möglichkeit, das Frequenzband zwischen 0 und 25 kHz für die ADSL - Nutzung zu verwenden, falls die Telefonfunktion im Bereich zwischen 0 und 4 kHz nicht benötigt wird. Entsprechende Vorschläge nutzen z.B. die Information über den Leitungszustand auf der Linecard im Zentralbüro (Central Office) und sorgen so im Fall eines eingehenden oder ausgehenden Rufes für die schnelle Freigabe der Frequenzträger im Sprachbereich.

Weitere Implementationen lassen nicht nur das Sprachband bis 25 kHz, sondern darüber hinaus noch das Frequenzband bis 100 kHz ungenutzt und beginnen die ADSL-Übertragung erst bei 120 kHz. Solche Verfahren beziehen sich auf ADSL mit 8 Mbit/s als Übertragungsrate.

Die Aufgabe der vorliegenden Erfindung besteht darin, Probleme zu lösen hinsichtlich der ADSL-Funktionstüchtigkeit bzw. Installationsprobleme, welche bei üblichen Systemen durch das analoge Läutsignal, den Auflege/Abnehm-Übergang, den fehlenden POTS-Splitter sowie die Messimpulseingabe verursacht werden.

Erfindungsgemäß wird diese Aufgabe durch das in Anspruch 1 angegebene Verfahren bzw. die in Anspruch 6 angegebene Vorrichtung gelöst.

Das erfindungsgemäße Verfahren und die entsprechende Vorrichtung zur gemeinsamen Übertragung von ISDN- und ADSL-Daten weisen gegenüber den bekannten Lösungsansätzen den Vorteil auf, daß ein paralleler vollständiger ISDN-Service sowie ein vollständiger ASDL-lite/full-Service möglich ist. Es ist für den ISDN-NT-Betrieb keine entfernte Leistungseinspeisung erforderlich.

Die der vorliegenden Erfindung zugrundeliegende Idee besteht darin, daß nicht zwei verschiedene Modulationsverfahren zur Übertragung von A-DSL- und ISDN-Daten verwendet werden, sondern die ISDN-Daten in das ADSL-Band hinein moduliert werden. Mit anderen Worten findet ein Packen der ISDN-Daten in den ADSL-Datenstrom statt. Dabei wird der ISDN-Datenstrom auf dafür reservierte Trägerfrequenzen moduliert. Die hat Vorteile für die Erhaltung der Sprachqualität und gewunschten Laufzeiten.

In den Unteransprüchen finden sich vorteilhafte Weiterbildungen und Verbesserungen des jeweiligen Gegenstandes der Erfindung.

Gemäß einer bevorzugten Weiterbildung wird der ISDN-Datenstrom im gemischten Datenstrom in einen Frequenzbereich zwischen 0 und 138 kHz, vorzugsweise zwischen 0 und 25 kHz, moduliert. Dies ist gerade der gegenwärtig nicht von ADSL benutzte Frequenzbereich. Ggfs. kann die obere Grenze für den ADSL-modulierten ISDN-Anteil verschiebbar sein. Gemäß einer besonders bevorzugten Ausführungsform wird die gesamte verfügbare Bandbreite von 0 bis 25 kHz zur Duplex - Übertragung mit 144 kbit/s genutzt.

Gemäß einer weiteren bevorzugten Weiterbildung wird der ADSL-Datenstrom im gemischten Datenstrom in Stromabwärtsrichtung in einen Frequenzbereich zwischen 138 und 1100 kHz, vorzugsweise zwischen 138 und 550 kHz, moduliert.

Ausführungsbeispiele der Erfindung sind in den Zeichnungen dargestellt und in der nachfolgenden Beschreibung näher erläutert.

Es zeigen:
- Fig. 1: eine schematische Darstellung der Frequenzbandaufteilung bei einer ersten Ausführungsform der Erfindung, und zwar für ADSL-lite;
- Fig. 2: eine schematische Darstellung einer Hardware-Konfiguration bei der ersten Ausführungsform der Erfindung; und
- Fig. 3: eine schematische Darstellung der Frequenzbandaufteilung bei üblicher paralleler Übertragung von POTS- und ADSL-Daten, und zwar. Fig. 3a für ADSL-lite und Fig. 3b für ADSL-full.

In den Figuren bezeichnen gleiche Bezugszeichen gleiche oder funktionsgleiche Elemente.

Fig. 1 zeigt eine schematische Darstellung der Frequenzbandaufteilung bei einer ersten Ausführungsform der Erfindung, und zwar für ADSL-lite, und Fig. 2 zeigt eine schematische Darstellung einer Hardware-Konfiguration bei der ersten Ausführungsform der Erfindung.

In Fig. 1 bezeichnen G ein gemeinsames Band mit ADSL-ISDN, einem ISDN-Bereich im ADSL-Band, und ADSL-DU, einem ADSL-Upstream-Bereich im ADSL-Band, sowie ADSL-DD einen ADSL-Downstream-Bereich im ADSL-Band.

Der ISDN-Datenstrom wird im gemischten Datenstrom in den Frequenzbereich G zwischen 0 und 138 kHz, hier zwischen 0 und 25 kHz, moduliert, wie durch die gestrichelte Linie dargestellt. Diese Grenze kann jedoch verschiebbar sein. Der ISDN-Datenstrom wird dabei auf dafür reservierte ADSL-Trägerfrequenzen moduliert wird.

Der ADSL-Datenstrom ADSL-DU wird im gemischten Datenstrom in Stromaufwärtsrichtung oberhalb eines für den ISDN-Datenstrom im gemischten Datenstrom vorgesehenen Frequenzbereichs moduliert, d.h. zwischen 25 und 138 kHz.

Der ADSL-Datenstrom ADSL-DD wird im gemischten Datenstrom in Stromabwärtsrichtung oberhalb des für den ADSL-Datenstrom im gemischten Datenstrom in Stromaufwärtsrichtung vorgesehenen Frequenzbereichs moduliert, hier zwischen 138 und 550 kHz.

Die vorliegende Ausführungsform der Erfindung verwendet also das bisher für das Sprachband vorgesehene Frequenzspektrum zwischen 0 und 25 kHz zur Übertragung von mehreren Sprachkanälen in digitaler Form. Da das Frequenzspektrum im Bereich der ADSL-Reichweiten eine Übertragungsrate von mehr als 144 kbit/s zuläßt, können sowohl Anwendungen realisiert werden, die dem Teilnehmer analoge Telefonanschlüsse bieten wie auch alternativ einen ISDN-Anschluß.

Für die Übertragung der Sprach/ISDN-Daten werden die nicht benutzten Träger im Frequenzbereich zwischen 0 und 25 kHz verwendet. Da die Übertragung voll-duplex erfolgen muß, wird. im unteren Spektrum bis 138 kHz ein Echo-Löschverfahren verwendet. Zur zusätzlichen Sicherung der Übertragung können bestimmte Verfahren wie Trelloskodierung verwendet werden. Im Gegensatz zum ADSL-Datenstrom wird kein Reed-Solomon-Algorithmus verwendet, um niedrige Verzögerungszeiten zu erreichen. Die vom ISDN bekannte Warmstartfähigkeit kann durch selektives Aktivieren oder Deaktivieren der unteren Träger realisiert werden.

In Figur 2 bezeichnet 10 einen Teilnehmeranschluß und 20 eine Linecard eines Central Office. Der Teilnehmeranschluß 10 und die Linecard 20 des Central Office sind durch eine Übertragungsleitung 1020 miteinander verbunden. 101 bzw. 201 bezeichnen ein jeweiliges ADSL-Modem zum Modulieren/ Demodulieren eines ISDN-Datenstroms 1012 bzw. 2012 in einen ADSL-Datenstrom 1011 bzw. 2011 und umgekehrt. Dabei bezeichnet 1011 den ADSL-Datenstrom auf der Seite des Teilnehmeranschlusses 10 und 2011 den ADSL-Datenstrom auf der Seite der Linecard 20. Weiterhin bezeichnet 1012 den ISDN-Datenstrom auf der Seite des Teilnehmeranschlusses 10 und 2012 den ISDN-Datenstrom auf der Seite der Linecard 20.

Auf der Seite des Teilnehmeranschlusses 10 wird der ISDN- Datenstrom 1012 einem ISDN-Transceiver 102 zugeführt, welcher einen üblichen ISDN-Bus (z. B. S0 - Bus) 1022 ausgangsseitig hat, der mit einem entsprechenden Endgerät, z. B. einem ISDN-Telefon, verbünden werden kann.

Aus dem ISDN-Datenstrom 1012 abgezweigt sind über eine jeweilige SLIC/CODEC-Einrichtung 103 bzw. 104 ein jeweiliger Analoganschluß 1023 bzw. 1024 (a/b), an dem ein entsprechendes analoges Endgerät, z. B. ein analoges Telefon, anschließbar ist. Um eine Notstromfähigkeit zu erzielen, ist der Analoganschluß 1024 mittels eines Relais 105 direkt mit der Datenübertragungsleitung 1020 verbindbar, so daß er direkt auf die Leitung zur Linecard 20 schaltbar ist. Dieses Relais 105 wird zweckmäßigerweise durch die Spannungsversorgung oder ein anders lokales Steuersignal betätigt.

Obwohl die vorliegende Erfindung vorstehend anhand bevorzugter Ausführungsbeispiele beschrieben wurde, ist sie auf vielfältige Art und Weise modifizierbar und ist nur durch die anliegenden Ansprüche beschränkt.

So sind die Frequenzbereiche prinzipiell beliebig auswählbar, und der ISDN-Datenstrom kann im gemischten Datenstrom auch im Stromabwärtsband des ADSL-Datenstroms untergebracht werden.

Auch kann die Hardwarekonfiguration anders dargestellt werden und ist nicht auf das erläuterte Beispiel beschränkt.

## Patentansprüche

1. Verfahren zur gemeinsamen Übertragung von ISDN- und ADSL-Daten zwischen einer ersten Station (10) und einer zweiten Station (20) über eine Übertragungsleitung (1020) mit den Schritten:
Modulieren eines ISDN-Datenstroms (1012) mittels eines ADSL-Modulators (101) in einen ADSL-Datenstrom (1011) in der ersten Station (10) zur Übertragung als gemischter Datenstrom in Stromaufwärtsrichtung an die zweite Station (20);
Demodulieren des gemischten Datenstroms in der zweiten Station (20) mittels eines ADSL-Demodulators (201) in einen entsprechenden übertragenen ADSL-Datenstrom (2011) und einen entsprechenden übertragenen ISDN-Datenstrom (2012), und
**gekennzeichnet dadurch, dass**
der ISDN-Datenstrom im gemischten Datenstrom in Stromaufwärtsrichtung auf dafür reservierte Trägerfrequenzen in einem ersten Frequenzbereich moduliert wird und der ADSL-Datenstrom im gemischten Datenstrom in Stromaufwärtsrichtung oberhalb des ersten Frequenzbereichs moduliert wird; und die weiteren Schritte:
Modulieren eines ISDN-Datenstroms (2012) mittels eines ADSL-Modulators (201) in einen ADSL-Datenstrom (2011) in der zweiten Station (20) zur Übertragung als gemischter Datenstrom in Stromabwärtsrichtung an die erste Station (10), wobei der ADSL-Datenstrom im gemischten Datenstrom in Stromabwärtsrichtung in einem zweiten Frequenzbereich oberhalb des ersten Frequenzbereichs moduliert wird; und
Demodulieren des gemischten Datenstroms in der ersten Station (10) mittels eines ADSL-Demodulators (101) in einen entsprechenden übertragenen ADSL-Datenstrom (1011) und einen entsprechenden übertragenen ISDN-Datenstrom (1012).

2. Verfahren nach Anspruch 1, **dadurch gekennzeichnet, dass** der erste Frequenzbereich zwischen 0 und 138 kHz, vorzugsweise zwischen 0 und 25 kHz, liegt.

3. Verfahren nach einem der vorhergehenden Ansprüche, **dadurch gekennzeichnet, dass** der zweite Frequenzbereich zwischen 138 und 1100 kHz, vorzugsweise zwischen 138 und 550 kHz, liegt.

4. Verfahren nach einem der vorhergehenden Ansprüche, **dadurch gekennzeichnet, dass** der erste Frequenzbereich eine verschiebbare obere Grenze für den ADSL-modulierten ISDN-Datenstrom aufweist.

5. Verfahren nach einem der vorhergehenden Ansprüche, **dadurch gekennzeichnet, dass** die erste Station (10) eine Home-Station und die zweite Station (20) eine Central-Office-Station ist.

6. Vorrichtung zur gemeinsamen Übertragung von ISDN-Daten und ADSL-Daten mittels des Verfahrens nach mindestens einem der vorhergehenden Ansprüche mit:
der ersten Station (10), welche über die Übertragunsleitung (1020) mit der zweiten Station (20) zum Übertragen des gemischten Datenstroms verbunden ist;
dem ADSL-Modulator (101) auf der Seite der ersten Station (10) zum Modulieren des ISDN-Datenstroms (1012) auf der Seite der ersten Station (10) den ADSL-Modulator (201) auf der Seite der zweiten Station (20) zum Demodulieren des gemischten Datenstroms in der zweiten Station (20) in einem entsprechenden ADSL-Datenstrom (2011) auf der Seite der zweiten Station (20) und einen entsprechenden übertragenen ISDN-Datenstrom (2012) auf der Seite der zweiten Station (20);
einem in der ersten Station (10) vorgesehenen ISDN-Transceiver (102) zum Senden und Empfangen des ISDN-Datenstroms (1012), welcher einerseits mit dem ADSL-Modulator (101) und andererseits mit einem ISDN-Gerät verbunden ist
**gekennzeichnet dadurch, dass**
der ADSL-Modulator (101) auf der Seite der ersten Station (10) zum Demodulieren des gemischten Datenstroms in der ersten Station (10) in einen entsprechenden übertragenen ADSL-Datenstrom (1011) auf der ersten Seite der ersten Station (10) und einen entsprechenden übertragenen ISDN-Datenstrom (1012) auf der Seite der ersten Station (10) und
der ADSL-Modulator (201) auf der Seite der zweiten Station (20) zum Modulieren des ISDN-Datenstroms (2012) auf der Seite der zweiten Station (20) eingerichtet ist.

## Claims

1. Method for joint transmission of ISDN and ADSL data between a first station (10) and a second station (20) via a transmission line (1020), having the following steps:
modulation of an ISDN data stream.(1012) by means of an ADSL modulator (101) to form an ADSL data stream (1011) in the first station (10) for transmission as a mixed data stream in the current upstream direction to the second station (20),
demodulation of the mixed data stream in the second station (20) by means of an ADSL demodulator (201) to form a corresponding transmitted ADSL data stream (2011) and a corresponding transmitted ISDN data stream (2012); and
**characterized in that**
the ISDN data stream in the mixed data stream in the current upstream direction is modulated onto carrier frequencies, which are reserved for this purpose, in a first frequency band, and the ADSL data stream in the mixed data stream in the current upstream direction is modulated above the first frequency band; and the further steps of:
modulation of an ISDN data stream (2012) by means of an ADSL modulator (201) to form an ADSL data stream (2011) in the second station (20) for transmission as a mixed data stream in the current downstream direction to the first station (10), with the ADSL data stream in the mixed data stream in the current downstream direction being modulated in a second frequency band above the first frequency band; and
demodulation of the mixed data stream in the first station (10) by means of an ADSL demodulator (101) to form a corresponding transmitted ADSL data stream (1011) and a corresponding transmitted ISDN data stream (1012).

2. Method according to Claim 1, **characterized in that** the first frequency band is between 0 and 138 kHz, preferably between 0 and 25 kHz.

3. Method according to one of the preceding claims, **characterized in that** the second frequency band is between 138 and 1100 kHz, preferably between 138 and 550 kHz.

4. Method according to one of the preceding claims, **characterized in that** the first frequency band has a moveable upper limit for the ADSL modulated ISDN data stream.

5. Method according to one of the preceding claims, **characterized in that** the first station (10) is a home station, and the second station (20) is a central office station.

6. Apparatus for joint transmission of ISDN and ADSL data by means of the method according to at least one of the preceding claims, having:
the first station (10) which is connected via the transmission line (1020) to the second station (20) for transmission of the mixed data stream;
the ADSL modulator (101) at the first station (10) end for modulation of the ISDN data stream (1012) at the first station (10) end the ADSL modulator (201) at the second station (20) end for demodulation of the mixed data stream in the second station (20) in a corresponding ADSL data stream (2011) at the second station (20) end, and a corresponding transmitted ISDN data stream (2012) at the second station (20) end;
an ISDN transceiver (102), which is provided in the first station (10) for transmission and reception of the ISDN data stream (1012) and is connected firstly to the ADSL modulator (101) and secondly to an ISDN terminal,
**characterized in that**
the ADSL modulator (101) at the first station (10) end is designed for demodulation of the mixed data stream in the first station (10) in a corresponding transmitted ADSL data stream (1011) at the first end of the first station (10N), and a corresponding transmitted ISDN data stream (1012) at the first station (10) end, and
the ADSL modulator (201) at the second station (20) end is designed for modulation of the ISDN data stream (2012) at the second station (20) end.

## Revendications

1. Procédé pour la transmission commune de données RNIS et de données ADSL entre une première station (10) et une deuxième station (20) par l'intermédiaire d'une ligne de transmission (1020), avec les étapes :
modulation d'un flux de données RNIS (1012) au moyen d'un modulateur ADSL (101) en un flux de données ADSL (1011) dans la première station (10) pour la transmission comme flux de données mixte dans le sens montant vers la deuxième station (20) ;
démodulation du flux de données mixte dans la deuxième station (20) au moyen d'un démodulateur ADSL (201) en un flux de données ADSL transmis correspondant (2011) et en un flux de données RNIS transmis correspondant (2012), et
**caractérisé par le fait que**
le flux de données RNIS dans le flux de données mixte dans le sens montant est modulé sur des fréquences porteuses réservées à cet effet dans une première plage de fréquences et le flux de données ADSL dans le flux de données mixte dans le sens montant est modulé au-dessus de la première plage de fréquences ; et par les autres étapes :
modulation d'un flux de données RNIS (2012) au moyen d'un modulateur ADSL (201) en un flux de données ADSL (2011) dans la deuxième station (20) pour la transmission comme flux de données mixte dans le sens descendant vers la première station (10), le flux de données ADSL dans le flux de données mixte dans le sens descendant étant modulé dans une deuxième plage de fréquences au-dessus de la première plage de fréquences ; et
démodulation du flux de données mixte dans la première station (10) au moyen d'un démodulateur ADSL (101) en un flux de données ADSL transmis correspondant (1011) et en un flux de données RNIS transmis correspondant (1012).

2. Procédé selon la revendication 1, **caractérisé par le fait que** la première plage de fréquences est comprise entre 0 et 138 kHz, de préférence entre 0 et 25 kHz.

3. Procédé selon l'une des revendications précédentes, **caractérisé par le fait que** la deuxième plage de fréquences est comprise entre 138 et 1100 kHz, de préférence entre 138 et 550 kHz.

4. Procédé selon l'une des revendications précédentes, **caractérisé par le fait que** la première plage de fréquences comporte une limite supérieure déplaçable pour le flux de données RNIS modulé ADSL.

5. Procédé selon l'une des revendications précédentes, **caractérisé par le fait que** la première station (10) est une station Home et la deuxième station (20) est une station Central Office.

6. Dispositif pour la transmission commune de données RNIS et de données ADSL au moyen du procédé selon l'une des revendications précédentes, avec :
la première station (10), qui est reliée par l'intermédiaire de la ligne de transmission (1020) à la deuxième station (20) pour la transmission du flux de données mixte ;
le modulateur ADSL (101) du côté de la première station (10) pour la modulation du flux de données RNIS (1012) du côté de la première station (10) et le modulateur ADSL (201) du côté de la deuxième station (20) pour la démodulation du flux de données mixte dans la deuxième station (20) en un flux de données ADSL transmis correspondant (2011) du côté de la deuxième station (20) et en un flux de données RNIS transmis correspondant (2012) du côté de la deuxième station (20) ;
un émetteur-récepteur RNIS (102) qui est prévu dans la première station (10) pour l'émission et la réception du flux de données RNIS (1012) et qui est relié d'une part au modulateur ADSL (101) et d'autre part à un appareil RNIS,
**caractérisé par le fait que**
le modulateur ADSL (101) est installé du côté de la première station (10) pour la démodulation du flux de données mixte dans la première station (10) en un flux de données ADSL transmis correspondant (1011) du côté de la première station (10) et en un flux de données RNIS transmis correspondant (1012) du côté de la première station (10) ; et
le modulateur ADSL (201) est installé du côté de la deuxième station (20) pour la modulation du flux de données RNIS (2012) du côté de la deuxième station (20).
